# DEMANDE DE BREVET EUROPEEN

(11) **EP 1 440 769 A1**
(43) Date de publication de la demande: **28.07.2004**
(21) Numéro de dépôt: 03300189.2
(22) Date de dépôt: 30.10.2003
(51) Int. Cl.: B25B 27/30

(54) **Dispositif de bridage de suspension pour un véhicule**

(30) Priorité: 31.10.2002 FR 0213714
(71) Demandeur: Dos Santos, 19270 Ussac (FR)
(72) Inventeur: Dos Santos, Albino Francisco DOS SANTOS, 19270 Ussac (FR)
(74) Mandataire: Fantin, Laurent

(57) **Abrégé**

L'objet de l'invention est un dispositif de bridage de suspension pour un véhicule comprenant au moins un ressort, caractérisé en ce qu'il comprend un bâti (10) en forme de L avec une base (12) et un montant (14), un bras (30) mobile en rotation autour d'un axe (32) disposé à l'extrémité du montant (14) et des moyens (42) de traction interposés entre l'extrémité (40) proximale de ce bras et le bâti (10).

## Description

La présente invention concerne un dispositif de bridage de suspension pour un véhicule.

Les suspensions concernées sont les suspensions dites à roues indépendantes avec des triangles de liaison et de maintien.

La roue avec son moyeu et son système de freinage sont solidaires d'un triangle bas dit aussi triangle de suspension par l'intermédiaire d'une rotule pour permettre les mouvements angulaires de la roue.

Entre ce triangle de suspension et la carrosserie, on trouve des moyens de suspension qui comprennent généralement un ressort hélicoïdal associé à une barre de torsion. Ce ressort hélicoïdal a ses extrémités immobilisées et travaille en compression. Ce ressort soutient le poids du véhicule et absorbe les chocs dus aux irrégularités de la route et il doit donc présenter une raideur importante mais adaptée aux caractéristiques du véhicule.

En complément de ce ressort, il est associé un amortisseur hydraulique dont le rôle est d'interrompre le plus rapidement les oscillations de ce ressort, générées par les chocs du revêtement sur les roues lors des déplacements.

Enfin pour finaliser les description simplifiée des éléments présents dans le cas d'une traction avant on peut indiquer la présence d'un arbre de transmission entre le moteur et dans tous les cas, la présence de la tringlerie de direction.

La rotule qui est disposée à l'extrémité du triangle de suspension est soumise à des efforts répétées et à un très grand nombre de mouvements.

Pour garantir sa longévité, les matériaux sont étudiés et surtout, il est prévu de faire travailler cette rotule dans un lubrifiant du type graisse. Cette graisse est contenue de façon étanche dans un soufflet adapté.

On constate que, par usure, par dégradation due aux chocs d'objets projetés ou par arrachement contre des obstacles, le soufflet, généralement réalisé en élastomère, laisse échapper le lubrifiant.

De ce fait, assez rapidement, la rotule se détériore et nécessite son remplacement.

Pour cette intervention, le mécanicien doit soulever le véhicule grâce à tout moyen adapté mais à une hauteur réduite afin de pouvoir retirer la roue.

Or on sait que lorsque a roue n'est plus en appui au sol; le poids de la voiture ne s'exerce plus sur cette roue et donc sur le ressort de suspension. De ce fait, ce ressort se détend à la limite de son débattement, entraînant avec lui le triangle de suspension.

Celui-ci prend une forte angulation vers le bas.

La rotule est généralement bloquée par cette forte angulation et il faut ramener le triangle en position sensiblement horizontale pour procéder à son retrait.

A cet effet, il existe des moyens de bridage des suspensions qui permettent de bloquer le débattement de la suspension. Ces moyens sont généralement des outils spécifiques à chaque modèle de véhicule pour tenir du type de suspension.

La mise en oeuvre n'est pas toujours aisée. Ces outils s'accrochent aux éléments de suspensions sous le passage de roue, ce qui n'est pas aisé à manipuler.

Enfin, pour un professionnel, surtout s'il propose l'entretien de différentes marques, le coût de tels outils devient vite important.

La présente invention propose un dispositif de bridage de suspension aisé à mettre en oeuvre, qui s'adapte à tous les types et marques de véhicules, qui est sûr et fiable et qui libère l'espace de travail au droit du passage de roue.

A cet effet, un mode de réalisation est maintenant décrit en détail suivant un mode de réalisation préférentiel mais non limitatif, ceci en regard des dessins annexés sur lesquels les différentes figures représentent :
- figure 1, une vue en perspective du dispositif selon la présente invention,
- figure 2, une vue en perspective de ce dispositif, une fois mis en place, et
- figure 3, une vue en perspective identique à celle de la figure 2, mais après mise en tension.

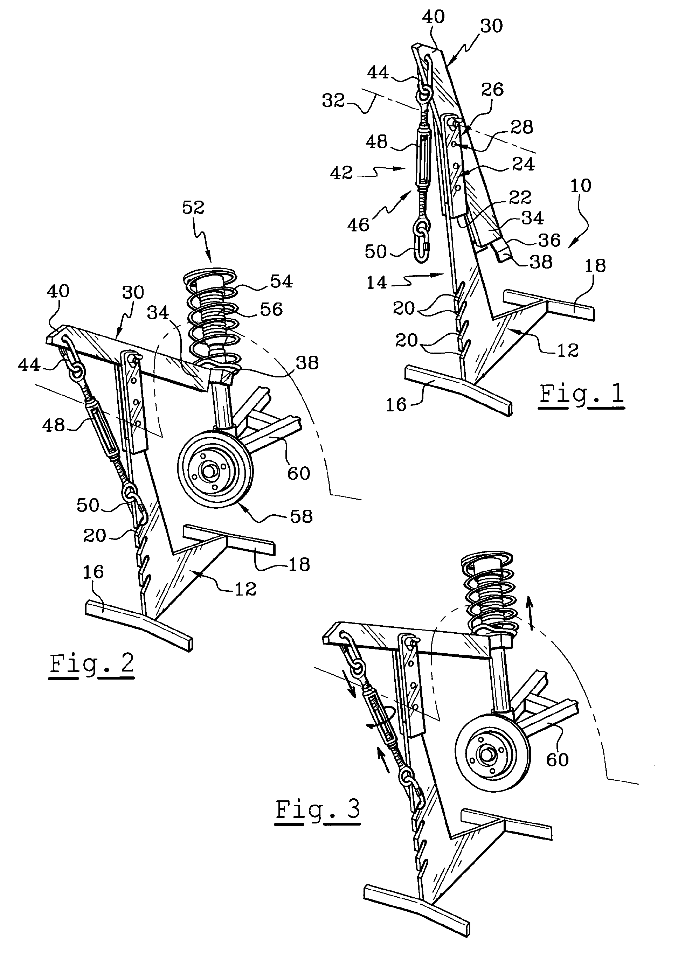

Sur la figure 1, le dispositif représenté comprend un bâti 10 en forme de L, comprenant une base 12 reposant sur le sol et un montant 14, sensiblement perpendiculaire à la base.

Le bâti 10 est avantageusement découpé directement dans une plaque métallique épaisse en sorte d'obtenir une pièce monolithique.

Aux deux extrémités de la base, des stabilisateurs 16 et 18 sont rapportés, par exemple par soudage. Ces stabilisateurs sont dans le même plan horizontal que la base mais orientés perpendiculairement.

Ces stabilisateurs permettent de lutter contre le renversement latéral.

Le montant comporte des crans 20 de réglage venus de découpe avec le bâti. Ces crans sont débouchants sur l'arrière du montant et inclinés vers la base.

A l'extrémité 22 du montant, il est rapporté une tête 24, de façon avantageuse également par soudage.

Cette tête forme une chape 26 avec des trous 28 régulièrement répartis sur toute la hauteur.

La chape reçoit un bras 30, mobile autour d'un axe 32, passant par une paire de trous 28 ménagés dans ladite chape.

Ce bras comprend une extrémité distale 34 équipée de moyens 36 de liaison, en l'occurrence une fourche 38.

L'autre extrémité proximale 40 de ce bras est équipée de moyens 42 de traction, réglables. Ces moyens 42 de traction comprennent des moyens 44 de fixation sur l'extrémité proximale du bras, des moyens 46 de manoeuvre sous forme d'un ridoir 48 et des moyens 50 d'accrochage amovible, prévus pour coopérer avec les crans 20.

Sur la figure 2, le dispositif est en position de travail devant une suspension 52 comprenant un ressort 54 hélicoïdal, un amortisseur 56 disposé de façon coaxiale à ce ressort, un ensemble de moyeu 58 de roue schématisé, solidaire de son triangle 60 de suspension inférieur.

Pour la mise en place de ce dispositif, l'opérateur règle la position du bras en fonction du type de véhicule, si nécessaire. Il procède à la mise sur cric, par exemple, du véhicule afin de pouvoir retirer la roue, ce qui conduit à la vue de la figure 2.

Pour régler et adapter le dispositif, il suffit pour cela de déplacer l'axe 32 et de le changer de trous 28. Avantageusement, un axe avec un écrou papillon facilite ce réglage.

La fourche 38 du bras 30 est placée sous le ressort 54, plus particulièrement sous la cuvette qui le reçoit.

Les moyens 50 d'accrochage amovible sont positionnés dans l'un des crans 20 accessibles en tendant manuellement ces moyens 42 de traction, afin de mettre la fourche 38 en butée.

Préalablement, il convient de prendre la précaution de replacer le ridoir dans sa position détendue.

Dans cette position de travail, le bâti est placé en sorte d'avoir la base 12 sous la roue, le montant 14 étant en retrait et dégageant l'accès au moyeu et aux différents organes de roue et de suspension.

Sur la figure 3, le ridoir a été manoeuvré en rotation et le double pas inversé dont il est muni permet de tendre l'ensemble et d'exercer une traction sur l'extrémité proximale du bras, provoquant simultanément un soulèvement de l'extrémité distale.

De ce fait, le ressort 54 hélicoïdal se trouve bridé et le triangle 60, soumis à l'action de ce ressort revient en position sensiblement horizontale.

Il est possible de démonter la rotule de direction, de manipuler les différents éléments sans subir la pression du ressort et/ou de la barre de torsion.

A la fin de l'intervention, il suffit de dévisser le ridoir dans le sens inverse pour obtenir la descente du bras et pour permettre le désengagement du dispositif.

Le dispositif selon la présente invention est particulièrement simple de mise en oeuvre, d'une grande fiabilité et adaptable à tous les types de véhicules.

## Revendications

1. Dispositif de bridage de suspension pour un véhicule comprenant au moins un ressort, **caractérisé en ce qu'**il comprend un bâti (10) en forme de L avec une base (12) et un montant (14), un bras (30) mobile en rotation autour d'un axe (32) disposé à l'extrémité du montant (14) et des moyens (42) de traction interposés entre l'extrémité (40) proximale de ce bras et le bâti (10).

2. Dispositif de bridage de suspension pour un véhicule selon la revendication 1, **caractérisé en ce que** les moyens (42) de traction comprennent des moyens (44) d'accrochage à l'extrémité (40) distale du bras, des moyens (50) d'accrochage amovible sur le bâti (10) et un ridoir (48).

3. Dispositif de bridage de suspension pour un véhicule selon la revendication 2, **caractérisé en ce que** le bâti comprend sur son montant (14) des moyens d'accrochage (50) amovible sur le bâti comprennent des crans (20) de réglage, débouchant sur l'arrière de ce montant (14) et inclinés vers la base (12).

4. Dispositif de bridage de suspension pour un véhicule selon l'une quelconque des revendications précédentes, **caractérisé en ce que** le bras (30) mobile en rotation comprend à son extrémité (34) distale des moyens (36) de liaison.

5. Dispositif de bridage de suspension pour un véhicule selon l'une quelconque des revendications précédentes, **caractérisé en ce qu'**il comprend une tête (24), formant une chape (26) adaptée pour recevoir le bras (30).

6. Dispositif de bridage de suspension pour un véhicule selon la revendication 5, **caractérisé en ce que** la tête (24) comprend des trous (28) régulièrement répartis sur toute la hauteur pour recevoir l'axe (32) de pivotement du bras (30) et assurer son positionnement.
